(19)

Europäisches
Patentamt

European
Patent Office

Office européen
des brevets

(11) **EP 2 051 360 B1**

(12) **EUROPÄISCHE PATENTSCHRIFT**

(45) Veröffentlichungstag und Bekanntmachung des Hinweises auf die Patenterteilung:
**21.09.2016 Patentblatt 2016/38**

(51) Int Cl.:
***H02M 3/335*** *(2006.01)*

(21) Anmeldenummer: **07020316.1**

(22) Anmeldetag: **17.10.2007**

(54) **Steuerschaltung für ein primär gesteuertes Schaltnetzteil mit erhöhter Genauigkeit der Spannungsregelung sowie primär gesteuertes Schaltnetzteil**

Control circuit for a primary controlled switching power supply with increased accuracy of voltage regulation and primary controlled switched mode power supply

Circuit de commande pour un bloc à découpage à commande primaire avec precision amèliorèe du réglage de la tension ainsi que un bloc à découpage à commande primaire

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**22.04.2009 Patentblatt 2009/17**

(73) Patentinhaber: **Power Systems Technologies GmbH**
**48346 Ostbevern (DE)**

(72) Erfinder:
• **Schröder, Ralf**
**49219 Glandorf (DE)**
• **Malsch, Rüdiger**
**01814 Bad Schandau (DE)**

(74) Vertreter: **Grünecker Patent- und Rechtsanwälte PartG mbB**
**Leopoldstraße 4**
**80802 München (DE)**

(56) Entgegenhaltungen:
**WO-A-2007/135452      US-A- 5 438 499**

EP 2 051 360 B1

**Beschreibung**

Die vorliegende Erfindung bezieht sich auf eine Steuerschaltung für ein primärseitig gesteuertes Schaltnetzteil zum Regeln der Ausgangsleistung des primär gesteuerten Schaltnetzteils. Insbesondere betrifft die Erfindung eine Steuerschaltung in einem primär gesteuerten Schaltnetzteil, das einen primärseitigen Schalter und einen Transformator mit mindestens einer Hilfswicklung aufweist. In der Hilfswicklung werden durch die primärseitigen Schaltvorgänge Spannungspulse induziert, die zum Regeln der Ausgangsleistung herangezogen werden können. Die Erfindung betrifft außerdem ein Verfahren zum Betreiben eines Schaltnetzteils der gattungsgemäßen Art und ein zugehöriges Schaltnetzteil.

Schaltnetzteile werden in zahlreichen elektronischen Geräten verwendet, um aus einer Netzspannung die zum Versorgen der elektronischen Bauteile notwendige Niedervoltgleichspannung zu erzeugen. Dabei haben sich Schaltnetzteile gegenüber konventionellen Netzteilen mit Netztransformatoren in den meisten Anwendungsfällen durchgesetzt, da sie ab einer gewissen Leistungsklasse einen besseren Wirkungsgrad aufweisen und insbesondere einen geringen Platzbedarf haben. Dieser geringe Platzbedarf ist vor allem für mobile Anwendungen von essentieller Bedeutung und ist darauf zurückzuführen, dass anstelle der Netzspannung eine hochfrequente Wechselspannung transformiert wird, die statt der üblichen Netzfrequenz von 50 Hz oder 60 Hz beispielsweise im Bereich von 20 kHz bis 200 kHz liegen kann. Da die erforderlichen Windungszahlen des Transformators umgekehrt proportional zur Frequenz sinken, lassen sich dadurch die Kupferverluste stark reduzieren und der gesamte Transformator wird wesentlich kleiner.

Um den Wirkungsgrad weiter zu optimieren, sind insbesondere primär getaktete Schaltnetzteile bekannt, bei denen die auf der Primärseite des Hochfrequenztransformators durch den Schalter, beispielsweise einen bipolaren Transistor, erzeugte Frequenz in Abhängigkeit von der auf der Sekundärseite des Netzteils anliegenden Last geregelt wird, um eine Sättigung des Hochfrequenztransformators zu vermeiden. Die zu einer solchen Regelung notwendige Rückkopplung wird z. B. dadurch realisiert, dass eine an einer Hilfswicklung abgegriffene Spannung als Regelgröße verwendet wird. Ein derartiges Regelverfahren ist beispielsweise in der europäischen Patentschrift EP 1 146 630 B1 gezeigt. Das in diesem Patent beschriebene Verfahren zur Regelung des Ausgangsstroms und/oder der Ausgangsspannung eines Schaltnetzteils beinhaltet, dass mit jedem Puls die gleiche Energie in den Transformator geladen wird.

Jeweils nach einer festen Zeit mit Bezug auf das Öffnen des Schalters wird die Spannung an der Hilfswicklung mit einem Abtasthalteglied (Sample-and-Hold-Element, S&H-Element) abgetastet und gespeichert.

Nachteil dieses Verfahrens ist jedoch, dass der Abtastzeitpunkt von großer Bedeutung für die Regeleigenschaften ist und die Form des Spannungspulses an der Hilfswicklung stark von den unterschiedlichen Betriebsparametern wie Eingangsspannung, Störgrößen und dergleichen beeinflusst wird. Das bedeutet, dass ein fest eingestellter Wert für den Abtastzeitpunkt die Flexibilität und Einsatzbreite eines solchen geregelten Schaltnetzteils stark einschränkt.

Deshalb wurde eine verbesserte Regelschaltung zum Regeln der Ausgangsleistung eines primär gesteuerten Schaltnetzteils entwickelt, die eine verbesserte Regelung bei gleichzeitig erhöhter Flexibilität bezüglich der Betriebsparameter ermöglicht. Diese Regelschaltung, die beispielsweise in der deutschen Patentschrift DE 103 103 61 B4 gezeigt ist, basiert auf der Idee, dass der Abtastzeitpunkt auf der Grundlage der Dauer des Spannungspulses an der Hilfswicklung während eines vorangegangenen Schaltzyklus ermittelt wird.

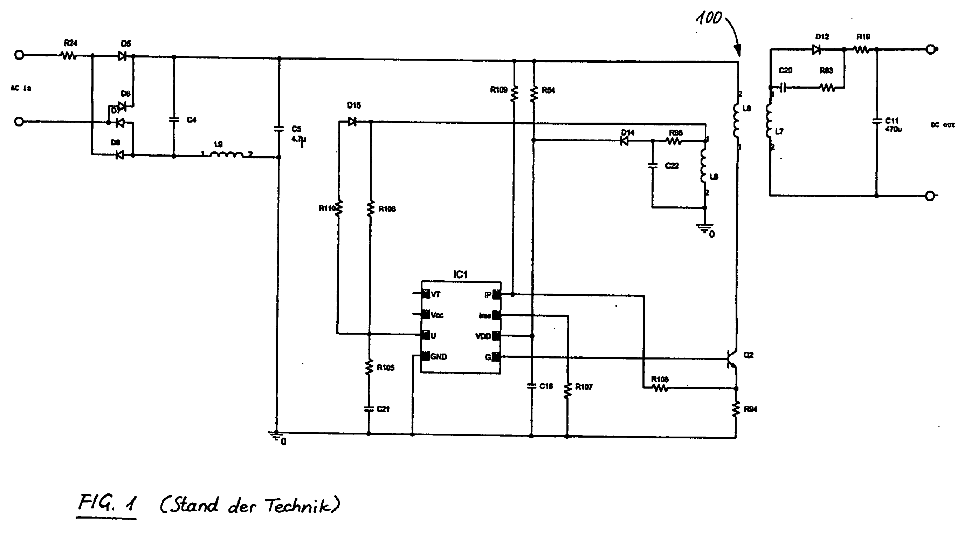

In der Fig. 1 ist ein Schaltbild eines Schaltnetzteils mit einer Regelschaltung IC1 gemäß der Patentschrift DE 103 10 361 B4 gezeigt, wobei zur Kompensation des Spannungsfalls an der Ausgangsleitung drei externe Bauteile, nämlich die Diode D15, der Widerstand R110 und der Kondensator C21, vorgesehen sind.

Das Funktionsprinzip dieser Schaltung soll im Folgenden detailliert erläutert werden: An dem Pin 1 der Hilfswicklung L8 des Transformators 100 entsteht, wenn der primärseitige Schalter Q2 eingeschaltet ist, eine negative Spannung, die proportional zu der Spannung an der primärseitigen Transformatorwicklung L6 ist. Der Widerstand R110 wandelt diese Spannung in einen Strom um, der durch den Widerstand R105 in den Kondensator C21 fließt.

Wenn der primärseitige Schalter Q2 ausgeschaltet ist, entsteht an dem Pin 1 der Wicklung L8 eine positive Spannung. Diese wird durch Diode D15 gesperrt, so dass kein Strom durch den Widerstand R110 fließen kann und so der Kondensator C21 umgeladen wird.

Da die Steuerschaltung IC1 den primärseitigen Schalter Q2 immer bei dem gleichen Strom in der primärseitigen Wicklung L1 abschaltet, ist die Einschaltdauer des Transistors Q2 umgekehrt proportional zu der Spannung an der primärseitigen Wicklung L6 im eingeschalteten Zustand. Es gilt:

$$U = L \cdot \frac{dI}{dt}$$

$$\Rightarrow t = L \cdot \frac{I_{max}}{U}$$

L = konstant und $I_{max}$ = konstant folgt:

$$t \sim \frac{1}{U}$$

Somit ist das Produkt der negativen Spannung an dem Pin 1 der Hilfswicklung L8 und der Dauer der negativen Pulse unabhängig von der Spannung an der primärseitigen Wicklung L6. Es gilt also:

$$U \cdot t \sim U \cdot \frac{1}{U} = konst.$$

Da die Spannung an der Hilfswicklung L8 viel größer ist als die Spannung, die an der Diode D15 abfällt, und auch viel größer ist als die Spannung, die an dem Kondensator C21 abfällt, gilt, dass der Strom durch den Widerstand R110 in etwa proportional zu der Spannung an der Hilfswicklung L8 ist.

Somit ist die Funktion dieser Schaltung unabhängig von der Spannung an der primärseitigen Wicklung L6 im eingeschalteten Zustand und es wird mit jedem Schaltpuls die gleiche Ladung auf den Kondensator C21 übertragen. Da aber mit zunehmender Last die Schaltfrequenz vergrößert wird, steigt auch mit zunehmender Last der Ladestrom des Kondensators C21.

Der Kondensator C21 wird über die Reihenschaltung der Widerstände R105 und R106 sowie der Hilfswicklung L8 entladen. Da der Mittelwert der Spannung an der Hilfswicklung L8 0 V beträgt, muss mit zunehmendem Ladestrom die Spannung an dem Konden-Kondensator C21 steigen, damit das Gleichgewicht zwischen dem Ladestrom und dem Entladestrom erhalten bleibt. Der Entladestrom berechnet sich zu:

$$I_{entlade} = \frac{U(C21)}{R105 + R106}$$

Da der Kondensator C21 in Reihe zu dem Spannungsteiler an dem Spannungsregeleingang U der Steuerschaltung IC1 geschaltet ist (negatives Potential an dem Widerstand R105), verringert sich die Spannung an dem Pin U um die Spannung an dem Kondensator C21. Der bekannte Baustein IC1 gleicht dies aus, indem die übertragene Leistung erhöht wird, bis die Spannung an dem Pin U den Regelwert erreicht.

Somit wird die Ausgangsspannung bei großer Last angehoben, während sie im Leerlauf nahezu unverändert bleibt. Der Grund hierfür ist, dass im Leerlauf die Schaltfrequenz so klein ist, dass die Spannung an dem Kondensator C21 nahezu 0 V beträgt.

Der Nachteil der in Fig. 1 gezeigten bekannten Schaltung ist, dass sie bei geringer Last weniger Wirkung hat als bei großer Last. Daher kann der Spannungsfall an der Ausgangsleitung nur zum Teil ausgeglichen werden. Andernfalls gäbe es Bereiche in der Ausgangskennlinie, in welchen die Spannung mit steigender Last anstiege. Dies ist aber unerwünscht.

Die US-A-5 438 499 offenbart eine Steuerschaltung für eine Schaltreglerschaltung, die eine Erfassung des magnetischen Flusses verwendet. Wie beispielsweise in den Figuren 4 und 6A dieser Druckschrift gezeigt, hat ein Fehlerverstärker einen Eingang, der mit einem Rückkopplungsanschluss verbunden ist, um ein Rückkopplungssignal basierend auf einem erfassten magnetischen Fluss zu empfangen. Der Fehlerverstärker tastet das Rückkopplungssignal ab und erzeugt ein Steuersignal.

In Antwort auf das Steuersignal steuert die logische Treiberschaltung gemäß dieser Druckschrift den An-/Aus-Zyklus der Ausgangsstufe. Darüber hinaus wird der Ausgang des tastenden Fehlerverstärkers an einen Lastregelungskompensationsschaltkreis 620 zurückgekoppelt. Dieser Lastregelungskompensationsschaltkreis passt in Verbindung mit einem Widerstand, der zwischen dem Rückkopplungsanschluss 408 und die Quelle des Rückkopplungssignals in Serie geschaltet ist, den Eingang des Abtastfehlerverstärkers 610 an, um Fehler, die durch parasitäre Spannungsabfälle in der Ausgangsschaltung des Schaltreglerkreises erzeugt werden, zu kompensieren.

Die Aufgabe, die der vorliegenden Erfindung zugrunde liegt, besteht darin, eine verbesserte Steuerschaltung für ein primärseitig gesteuertes Schaltnetzteil anzugeben, wodurch die Genauigkeit der Spannungsregelung erhöht werden kann, und die gleichzeitig besonders kostengünstig und weitgehend integrierbar herzustellen ist.

Diese Aufgabe wird durch eine Steuerschaltung und ein zugehöriges Verfahren mit den Merkmalen der unabhängigen Patentansprüche gelöst. Vorteilhafte Weiterbildungen sind Gegenstand der abhängigen Patentansprüche.

Dabei basiert die vorliegende Erfindung auf der Erkenntnis, dass mittels einer Rückführung des Ausgangssignals des Fehlerverstärkers auf den Spannungsmesseingang einer besonders einfachen, in einem ASIC (application specific integrated circuit, anwenderspezifischer integrierter Schaltkreis) integrierten Schaltung zusammen mit einem externen Kondensator, sowie dem bereits vorhandenen externen Spannungsteiler, eine stufenlos einstellbare Steigung der Ausgangsspannung in Abhängigkeit vom Ausgangsstrom realisiert werden kann. Auf diese Weise wird die Ausgangsspannung wesentlich weniger von der anliegenden Last beeinflusst und die Auswirkungen des Spannungsfalls an der Ausgangsleitung können minimiert werden. Durch die Integrierbarkeit in einen ASIC können darüber hinaus Kosten gespart werden.

Bei einer vorteilhaften Ausführungsform der vorliegenden Erfindung beinhaltet der Rückführzweig einen Rückführschalter und mindestens einen zu dem Rückführschalter in Serie geschalteten Widerstand. Der Schalter kann beispielsweise durch einen Feldeffekttransistor gebildet sein.

Weiterhin kann der Rückführschalter so angesteuert werden, dass er leitet, wenn ein Demagnetisierungssignal angibt, dass in dem Transformator kein Strom fließt. Dadurch kann ein Kondensator geladen werden, wenn der Fehlerverstärker ein positives Ausgangssignal hat, ohne dass die Abtasthalteschaltung, welche die Hilfsspannung erfasst, in ihrer Funktion beeinträchtigt wird. In vorteilhafter Weise wird der Steuerschalter immer dann eingeschaltet, wenn die Spannung an dem Spannungsmesseingang einen vorgegebenen Referenzwert unterschreitet, und wieder ausgeschaltet, wenn der primärseitige Schalter ausgeschaltet wird. Auf diese Weise kann die Ausgangsspannung bei großem Lastwiderstand nur wenig angehoben werden, während sie bei geringem Lastwiderstand stärker angehoben wird.

Durch Beschaltung mit wenigen externen Bauteilen und entsprechende Anpassung derselben kann die Höhe der Spannungsanhebung stufenlos an die jeweiligen Erfordernisse angepasst werden.

Ein besonderer Vorteil der erfindungsgemäßen Lösung ist darin zu sehen, dass durch Anpassen dieser externen Bauteile sowohl wie oben beschrieben die Intensität der Wirkung, als auch das Frequenzverhalten durch die externe Beschaltung optimal an die Erfordernisse angepasst werden kann. Da aber alle Hauptkomponenten in der integrierten Schaltung realisiert werden können, sind nur wenige externe Bauteile erforderlich. Darüber hinaus benötigt der erfindungsgemäße Steuerbaustein keine zusätzlichen Pins, da die gewünschte Funktion über den ohnehin erforderlichen Messeingang der Spannungsregelung realisiert wird.

Da bei der erfindungsgemäßen Schaltung der maximale Strom in den Transformator über den Steuerausgang der integrierten Schaltung erfasst wird, kann der Fehler, der durch Verzögerungszeiten der Erkennung und des primärseitigen Schalters bei unterschiedlichen Betriebsspannungen verursacht wird, nicht wie üblich durch Aufkoppeln eines geringen betriebsspannungsabhängigen Stroms auf das Messsignal kompensiert werden. In einer vorteilhaften Ausführungsform des erfindungsgemäßen Schaltnetzteils wird deshalb eine zusätzliche Transformatorwicklung eingebaut, die aufgrund einer sehr geringen Windungszahl (typischerweise nur eine einzelne Windung) trotz eines erforderlichen Stroms von mehreren mA nur eine sehr geringe Verlustleistung verursacht. Durch diese zusätzliche Hilfswicklung und einen dazu in Serie geschalteten Widerstand kann der Maximalstrom bei hoher Ausgangsspannung so weit reduziert werden, dass eine nahezu eingangsspannungsunabhängige Ausgangsstrombegrenzung entsteht.

Alternativ wäre es selbstverständlich auch möglich, dieselbe Funktion in üblicher Weise mit einem separaten Stromerfassungseingang an dem integrierten Baustein zu realisieren. Dadurch wird jedoch der integrierte Baustein größer und teurer.

Gemäß einer weiteren vorteilhaften Ausführungsform des primärseitig gesteuerten Schaltnetzteils mit einer Steuerschaltung nach der vorliegenden Erfindung wird die aus dem Ausgang des Fehlerverstärkers abgeleitete Spannung der Spannung an dem Komparator zur Maximalstromerkennung überlagert. Dadurch sinkt der Maximalstrom bei steigender Ausgangsspannung des Fehlerverstärkers. Da der Fehlerverstärker im Leerlauf die höchste Ausgangsspannung hat, während sie bei einer Ausgangsspannung unterhalb des Spannungsriegelbereichs bei ca. 0 V liegt, wird bei geringer Last der Maximalstrom, der durch den primärseitigen Schalter fließt, reduziert.

Diese Lösung hat die folgenden Vorteile: Die Schaltfrequenz bei geringer Last steigt, und dadurch ist eine schnellere Reaktion auf Lastwechsel möglich. das Spannungs-Zeit-Wandlerelement, das die Ausgangsspannung des Regelverstärkers in eine Pausendauer umwandelt, kann vereinfacht werden, da es eine weniger lange Maximalzeit erzeugen muss. Schließlich sinkt bei geringer Last die Flussdichte im Transformator und es können hörbare Geräusche verringert oder sogar ganz vermieden werden.

Zum besseren Verständnis der vorliegenden Erfindung wird diese anhand der in den nachfolgenden Figuren dargestellten Ausführungsbeispiele näher erläutert. Dabei werden gleiche Teile mit gleichen Bezugszeichen und gleichen Bauteilbezeichnungen versehen. Weiterhin können auch einige Merkmale oder Merkmalskombinationen aus den gezeigten und beschriebenen unterschiedlichen Ausführungsformen für sich eigenständige, erfinderische oder erfindungsgemäße Lösungen darstellen. Es zeigen:

Fig. 1 ein Schaltbild eines Schaltnetzteils mit einer Steuerschaltung gemäß der DE 103 103 61 B4 und einer Schaltung zur Kompensation des Spannungsfalls an der Ausgangsleitung;

Fig. 2 ein Schaltbild eines Schaltnetzteils mit einer Steuerschaltung gemäß der vorliegenden Erfindung;

Fig. 3 ein Schaltbild der in Fig. 2 verwendeten Steuerschaltung gemäß einer ersten Ausführungsform mit fester Strombegrenzung;

Fig. 4 ein Schaltbild der in Fig. 2 verwendeten Steuerschaltung gemäß einer weiteren Ausführungsform mit variabler Strombegrenzung.

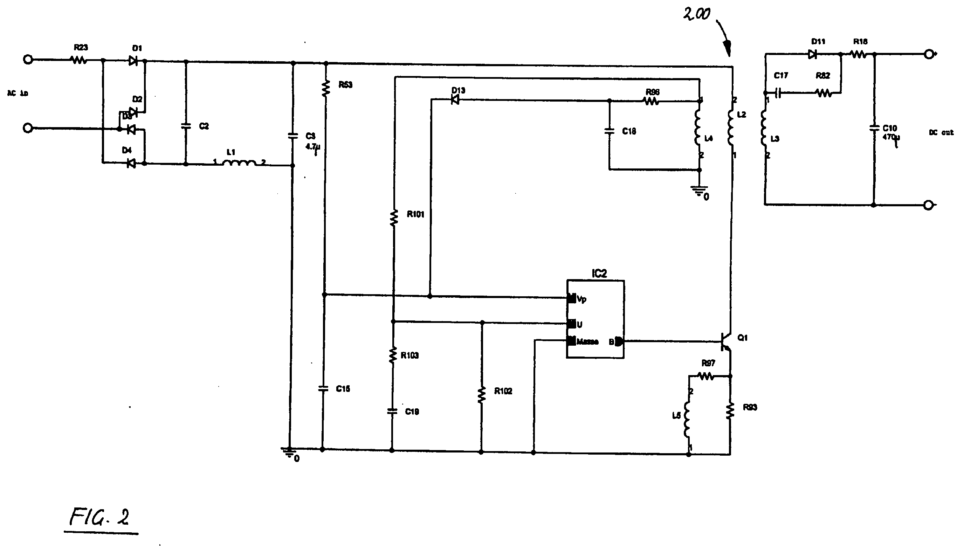

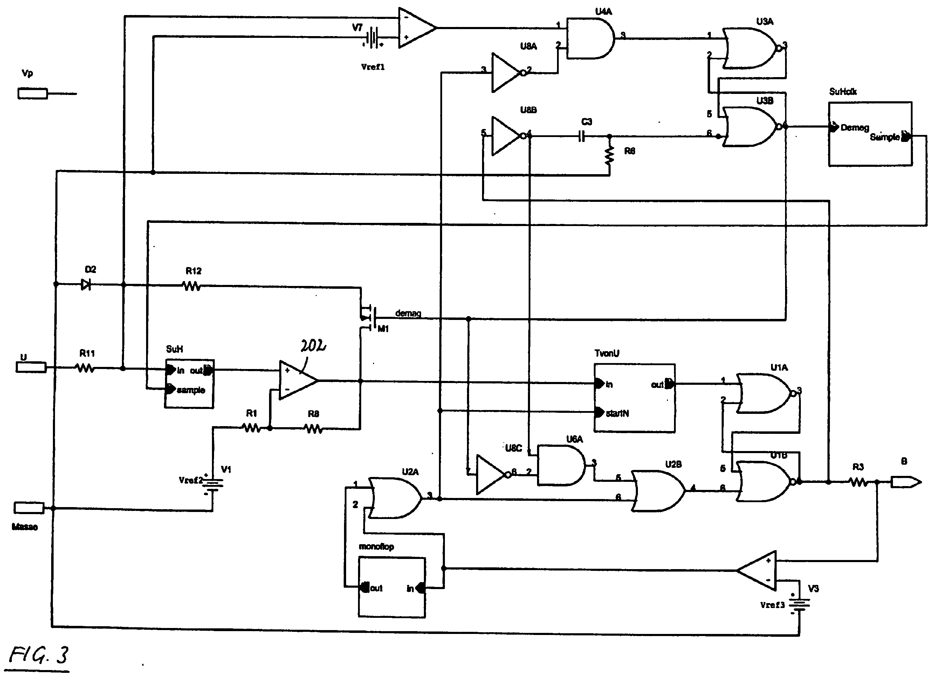

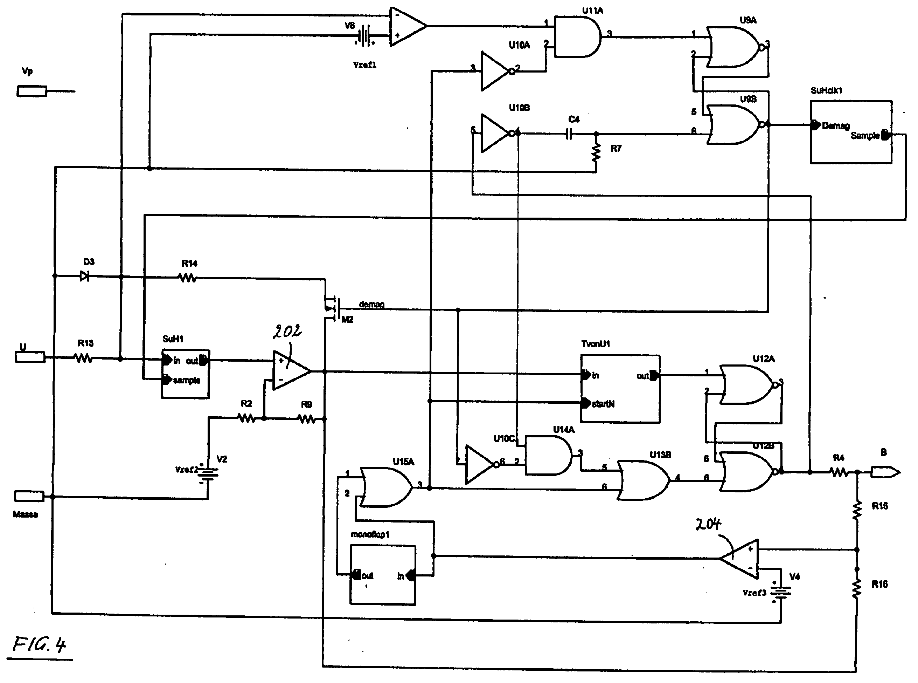

Fig. 2 zeigt die erfindungsgemäße Steuerschaltung IC2 in ihrer Applikationsumgebung. Das Schaltnetzteil realisiert ein ähnliches Ansteuerprinzip wie die in Fig. 1 gezeigte Architektur gemäß der DE 103 103 61 B4. Auch hier ist in Reihe zu dem Spannungsteiler an dem Regeleingang U ein Kondensator C19 geschaltet. Im Gegensatz zu der Anordnung gemäß Fig. 1 können jedoch die Diode D15 und der Widerstand R110 entfallen, wie nachfolgend mit Bezug auf die Figuren 3 und 4 noch im Detail erläutert wird. Der parallel zu der Reihenschaltung aus dem Widerstand R103 und dem Kondensator C19 geschaltete Widerstand R102 dient der Anpassung des Regelverhaltens an die jeweiligen Anforderungen, kann aber gegebenenfalls auch ganz entfallen.

In Fig. 3 ist der grundsätzliche Aufbau der Steuerschaltung IC2 aus Fig. 2 gemäß einer ersten Ausführungsform dargestellt. Dabei sind nur diejenigen Schaltungsteile gezeigt, die für die vorliegende Erfindung von Bedeutung sind.

Wenn der primärseitige Transistor Q1 (siehe Fig. 2) ausgeschaltet ist, wird die an dem Pin U, dem Spannungsmesseingang, anliegende Spannung dem Abtasthalteelement SuH zugeführt und gespeichert. Durch den Fehlerverstärker 202 wird das Ausgangssignal des Abtasthalteelements SuH mit einer Referenzspannung Vref2 verglichen und die Abweichung wird verstärkt. Das Ausgangssignal dieses Fehlerverstärkers 202 wird einem Spannungs-Zeit-Wandler TvonU zugeführt und bestimmt so den Zeitpunkt, zu dem das nächste Einschalten des primärseitigen Schalters Q1 erfolgt. Diese Arbeitsweise entspricht der Funktion der Steuerschaltung aus der DE 103 103 61 B4.

In der erfindungsgemäßen Ansteuerschaltung ist eine Rückführung des Ausgangssignals des Fehlerverstärkers 202 auf den Spannungsmesseingang U vorgesehen. In der hier gezeigten Ausführungsform ist der Rückführzweig durch einen Schalter M1, einen Widerstand R12 und einen Widerstand R11 gebildet. Der Schalter M1 kann beispielsweise ein Feldeffekttransistor sein. Der Widerstand R12 kann auch entfallen, indem er in den Widerstand R11 integriert wird. In diesem Fall muss allerdings das Abtasthalteelement SuH einen hochohmigen Eingang haben.

Der Schalter M1 ist immer dann eingeschaltet, wenn in dem Transformator 200 (siehe Fig. 2) kein Strom fließt, sowie dann, wenn der primärseitige Schalter Q1 eingeschaltet ist. Das heißt, der Rückführschalter M1 wird eingeschaltet, wenn die Spannung an dem Spannungsmesseingang U den Referenzwert Vref1 unterschreitet, und wieder ausgeschaltet, wenn der primärseitige Schalter Q1 ausgeschaltet wird.

Dadurch wird der in Fig. 2 gezeigte Ladekondensator C19 geladen, wenn der Fehlerverstärker 202 ein positives Ausgangssignal hat, ohne dass das Abtasthalteglied SuH in seiner Funktion beeinträchtigt wird. Je höher die Ausgangsspannung des Fehlerverstärkers 202 und je länger die Zeit ist, während der in der Sekundärwicklung L3 des Transformators 200 kein Strom fließt, desto stärker wird der Kondensator C19 geladen.

Je höher die Spannung an dem Kondensator C19 ist, desto geringer wird die Ausgangsspannung, da durch die Spannung an dem Kondensator C19 die Spannung an dem Pin U angehoben wird. Dies führt dazu, dass die Regelung die Ausgangsspannung absenkt, bis die Spannung an dem Spannungsmesseingang U während des Abtastens gleich der Referenzspannung Vref2 ist.

Somit wird die Ausgangsspannung bei großem Lastwiderstand nur wenig angehoben, während sie bei geringem Lastwiderstand stärker angehoben wird. Durch Anpassung der in Fig. 2 gezeigten externen Widerstände R101, R103 und gegebenenfalls R102 kann die Höhe der Spannungsanhebung stufenlos an die jeweiligen Erfordernisse angepasst werden. Wie bereits erwähnt, ist ein besonderer Vorteil darin zu sehen, dass durch Anpassen der externen Elemente die Intensität der Wirkung auf das Frequenzverhalten optimal an die jeweiligen Erfordernisse angepasst werden kann.

Mit Bezug auf die Figuren 2 und 3 soll im Folgenden ein weiterer Gesichtspunkt der erfindungsgemäßen Steuerschaltung erläutert werden. Da bei dieser Schaltung der maximale Strom in dem Transformator 200 über den Steuerausgang B der Steuerschaltung IC2 erfasst wird, kann eine Kompensation des Fehlers, der durch Verzögerungszeiten der Erkennung und des Transistors Q1 bei unterschiedlichen Betriebsspannungen verursacht wird, nicht mehr durch Aufkoppeln eines geringen betriebsspannungsabhängigen Stroms auf das Messsignal erfolgen. Um dieses Problem zu überwinden, wurde in dem erfindungsgemäßen Schaltnetzteil eine zusätzliche Transformatorwicklung L5 vorgesehen. Diese zusätzliche Transformatorwicklung hat nur eine geringe Windungszahl, typischerweise eine einzelne Windung. Daher verursacht sie trotz eines erforderlichen Stroms von mehreren mA nur eine sehr geringe Verlustleistung des Schaltnetzteils.

Mit Hilfe der zusätzlichen Wicklung L5 und eines hierzu in Serie geschalteten Widerstands R97 kann der Maximalstrom bei hoher Ausgangsspannung so reduziert werden, dass eine nahezu eingangsspannungsunabhängige Ausgangsstrombegrenzung erreicht werden kann.

Wie bereits erwähnt, kann selbstverständlich diese Funktion auch mit Hilfe eines separaten Stromerfassungseingangs an dem Steuerbaustein IC2 realisiert werden, bedingt jedoch größere Abmessungen und erhöhte Kosten.

Eine weitere vorteilhafte Ausführungsform der erfindungsgemäßen Steuerschaltung ist in Fig. 4 gezeigt. Bei dieser Steuerschaltung ist im Gegensatz zu der Ausführungsform der Fig. 3, bei der die Strombegrenzung fest eingestellt ist, eine variable Strombegrenzung vorgesehen.

Gemäß dieser Ausführungsform wird mit dem Spannungsteiler R16, R15 eine aus dem Ausgang des Fehlerverstärkers 202 abgeleitete Spannung der Spannung an dem Komparator 204 zur Maximalstromerkennung überlagert. Dadurch sinkt der Maximalstrom bei steigender Ausgangsspannung des Fehlerverstärkers 202. Da der Fehlerverstärker 202 im Leerlauf die höchste Ausgangsspannung hat, während sie bei einer Ausgangsspannung unterhalb des Spannungsregelbereichs bei ca. 0 V liegt, wird bei geringer Last der Maximalstrom, der durch den Schalter Q1 fließt, reduziert.

Wie bereits erwähnt, hat dieses Vorgehen zum einen den Vorteil, dass die Schaltfrequenz bei geringer Last steigt und dass dadurch eine schnellere Reaktion auf Lastwechsel möglich ist. Weiterhin kann das Spannungs-Zeit-Wandler-Element TvonU, das die Ausgangsspannung des Fehlerverstärkers 202 in eine Pausendauer umwandelt, vereinfacht werden, da es eine weniger lange Maximalzeit erzeugen muss. Schließlich sinkt bei geringer Last die Flussdichte im Transformator und es können hörbare Geräusche verringert oder sogar vollständig vermieden werden.

Die erfindungsgemäße Steuerschaltung sowie das zugehörige primärseitig geregelte Schaltnetzteil erlauben also eine erhöhte Genauigkeit der Spannungsregelung und eine Kompensation des Spannungsfalls an der Ausgangsleitung. Weiterhin können die wesentlichen Komponenten der erfindungsgemäßen Lösung in einem ASIC integriert werden und es sind nur wenige externe Bauteile erforderlich. Der Kondensator C19 sowie der bereits vorhandene Spannungsteiler können so dimensioniert werden, dass die Steigung der Ausgangsspannung in Abhängigkeit vom Ausgangsstrom den Erfordernissen angepasst ist.

**Patentansprüche**

1. Steuerschaltung für ein primärseitig gesteuertes Schaltnetzteil umfassend:

    einen Steuerausgang (B), der mit dem Steuereingang eines primärseitigen Schalters (Q1) des Schaltnetzteils verbindbar ist;
    einen Spannungsmesseingang (U), der zum Erfassen einer Hilfsspannung, die in Abhängigkeit von der sekundärseitigen Ausgangsspannung induziert wird, mit einer primärseitigen Hilfswicklung (L4) eines Transformators (200) verbindbar ist,
    einen Fehlerverstärker (202) zum Vergleichen der erfassten Hilfsspannung mit einem Referenzwert (Vref2) und zum Verstärken der Abweichung zwischen der erfassten Hilfsspannung und dem Referenzwert,
    wobei die Steuerschaltung (IC2) weiterhin einen Rückführzweig zum Rückführen des Ausgangssignals des Fehlerverstärkers (202) an den Spannungsmesseingang (U) aufweist, und wobei der Rückführzweig einen Rückführschalter (M1, M2) und mindestens einen zu dem Rückführschalter in Serie geschalteten Rückführwiderstand (R12, R14) aufweist, **gekennzeichnet dadurch, dass**
    der Rückführschalter so angesteuert ist, dass er leitet, wenn ein Demagnetisierungssignal angibt, dass in dem Transformator kein Strom fließt, und weiterhin so angesteuert ist, dass er leitet, wenn das Signal an dem Steuerausgang (B) angibt, dass der primärseitige Schalter (Q1) eingeschaltet ist.

2. Steuerschaltung nach Anspruch 1, weiterhin umfassend ein Abtasthalteelement (SuH, SuH1) zum Erfassen der Hilfsspannung.

3. Steuerschaltung nach mindestens einem der vorhergehenden Ansprüche, wobei das Ausgangssignal des Fehlerverstärkers (202) weiterhin einer Spannung an einem Komparator (204) zur Maximalstromerkennung überlagert ist.

4. Steuerschaltung nach Anspruch 35, wobei der Ausgang des Fehlerverstärkers über einen Spannungsteiler (R15, R16) mit dem Eingang des Komparators verbunden ist.

5. Steuerschaltung nach mindestens einem der vorhergehenden Ansprüche, weiterhin umfassend einen Spannungs-Zeit-Wandler (TvonU) zum Bestimmen des Zeitpunkts, zu dem das nächste Einschalten des primärseitigen Schalters erfolgt, in Abhängigkeit von dem Ausgangssignal des Fehlerverstärkers.

6. Primärseitig gesteuertes Schaltnetzteil mit
    einem Transformator (200), der eine primärseitige (L2) und eine sekundärseitige (L3) Hauptwicklung aufweist,
    einem primärseitigen Schalter (Q1) zum Unterbrechen eines Stroms, der durch die primärseitige Hauptwicklung fließt,
    mindestens einer primärseitigen Hilfswicklung (L4), in der nach dem Öffnen des primärseitigen Schalters eine Hilfsspannung zum Abbilden der Ausgangsspannung induziert wird,
    und einer Steuerschaltung (IC2) nach mindestens einem der vorangegangenen Ansprüche.

7. Schaltnetzteil nach Anspruch 6, wobei Spannungsmesseingang (U) über einen Ladekondensator (C19) mit einem Gleichspannungspotential oder Massepotential verbunden ist.

8. Schaltnetzteil nach Anspruch 7, wobei die primärseitige Hilfswicklung (L4) über eine Serienschaltung aus einem ersten und einem zweiten Widerstand (R101, R103) mit einem ersten Anschluss des Ladekondensators (C19) verbunden ist, und der Spannungsmesseingang (U) mit einem gemeinsamen Knoten zwischen dem ersten und dem zweiten Widerstand verbunden ist.

9. Schaltnetzteil nach Anspruch 6, wobei der Transformator weiterhin eine zusätzliche Wicklung (L5) aufweist, die mit einem Anschluss mit dem primärseitigen Schalter (Q1) und mit einem anderen Anschluss mit einem Massepotential verbunden ist.

10. Schaltnetzteil nach Anspruch 9, wobei die zusätzliche Wicklung (L5) eine geringe Windungszahl, vorzugsweise eine einzelne Windung, hat.

**11.** Schaltnetzteil nach Anspruch 9 oder 10, wobei zwischen der zusätzlichen Wicklung (L5) und dem primärseitigen Schalter (Q1) ein Begrenzungswiderstand (R97) zum Begrenzen des Maximalstroms angeordnet ist.

**12.** Schaltnetzteil nach einem der Ansprüche 8 bis 11, wobei parallel zu der Serienschaltung aus dem zweiten Widerstand (R103) und dem Ladekondensator (C19) ein dritter Widerstand (R102) zum Anpassen des Regelverhaltens angeordnet ist.

**13.** Schaltnetzteil nach einem der Ansprüche 6 bis 9, wobei zwischen dem Schalter (Q1) und einem Massepotential ein Strommesswiderstand (R93) angeordnet ist.

**14.** Verfahren zum Steuern eines primärseitigen Schalters mittels einer Steuerschaltung (IC2) in einem Schaltnetzteil mit einem Transformator (200), der eine primärseitige (L2) und eine sekundärseitige (L3) Hauptwicklung sowie mindestens eine primärseitige Hilfswicklung (L4), in der nach dem Öffnen des primärseitigen Schalters eine Hilfsspannung zum Abbilden der Ausgangsspannung induziert wird, aufweist, wobei das Verfahren die folgenden Schritte umfasst:

Ansteuern des primärseitigen Schalters (Q1) zum Unterbrechen eines Stroms, der durch die primärseitige Hauptwicklung fließt,
Erfassen der Hilfsspannung an einem Spannungsmesseingang (U) der Steuerschaltung (IC2),
Vergleichen der erfassten Hilfsspannung mit einem Referenzwert (Vref2) und Verstärken der Abweichung zwischen der erfassten Hilfsspannung und dem Referenzwert mittels eines Fehlerverstärkers (202),
Rückführen des Ausgangssignals des Fehlerverstärkers (202) an den Spannungsmesseingang (U), wobei das Ausgangssignal des Fehlerverstärkers (202) über einen Rückführschalter (M1, M2) und mindestens einen zu dem Rückführschalter in Serie geschalteten Rückführwiderstand (R12, R14) an den Spannungsmesseingang (U) zurückgeführt wird, **gekennzeichnet dadurch, dass** der Rückführschalter so angesteuert wird, dass er leitet, wenn ein Demagnetisierungssignal angibt, dass in dem Transformator kein Strom fließt, und wobei der Rückführschalter so angesteuert wird, dass er leitet, wenn das Signal an dem Steuerausgang (B) angibt, dass der primärseitige Schalter (Q1) eingeschaltet ist.

**15.** Verfahren nach Anspruch 16, wobei das Erfassen der Hilfsspannung an einem Spannungsmesseingang (U) der Steuerschaltung (IC2) mittels eines Abtasthalteelements (SuH, SuH1) erfolgt.

**16.** Verfahren nach mindestens einem der Ansprüche 14 bis 15, wobei das Ausgangssignal des Fehlerverstärkers (202) weiterhin einer Spannung an einem Komparator (204) zur Maximalstromerkennung überlagert wird.

**17.** Verfahren nach Anspruch 16, wobei der Ausgang des Fehlerverstärkers über einen Spannungsteiler (R15, R16) mit dem Eingang des Komparators (204) verbunden ist.

**18.** Verfahren nach mindestens einem der Ansprüche 14 bis 17, wobei der Zeitpunkt, zu dem das nächste Einschalten des primärseitigen Schalters erfolgt, in Abhängigkeit von dem Ausgangssignal des Fehlerverstärkers mittels eines Spannungs-Zeit-Wandler (TvonU) bestimmt wird.

**Claims**

**1.** Control circuit for a primary side controlled switch mode power supply, said control circuit comprising:

a control output (B) which can be connected to the control input of a primary side switch (Q1) of said switch mode power supply;
a voltage measurement input (U) which can be connected to a primary side auxiliary winding (L4) of a transformer (200) for detecting an auxiliary voltage which is induced in response to a secondary side output voltage;
an error amplifier (202) for comparing the detected auxiliary voltage with a reference value (Vref2) and for amplifying the deviation between the detected auxiliary voltage and said reference value;
wherein said control circuit (IC2) further comprises a feedback branch for feeding back the output signal of the error amplifier (202) to the voltage measurement input (U), and wherein the feedback branch comprises a feedback switch (M1, M2) and at least one feedback resistor (R12, R14) which is connected in series to said feedback switch, **characterized in that** said feedback switch is controlled to be conducting, when a demagnetization signal indicates that within the transformer no current is flowing, and is further controlled to be conducting, when the signal at said control output (B) indicates that the primary side switch (Q1) is switched on.

**2.** Control circuit according to claim 1, also comprising a sample-and-hold element (SuH, SuH1) for detecting the auxiliary voltage.

3. Control circuit according to at least one of the preceding claims, wherein the output signal of the error amplifier (202) also overlaps a voltage at a maximum current detection comparator (204).

4. Control circuit according to claim 3, wherein the output of the error amplifier is connected to the input of the comparator via a voltage divider (R15, R16).

5. Control circuit according to at least one of the preceding claims, also comprising a voltage-time converter (TvonU) for the determination of the time point when the next switching-on of the primary-side switch will occur, as a function of the output signal of the error amplifier.

6. Primary-side controlled switch mode power supply with
a transformer (200) which has a primary-side (L2) and a secondary-side (L3) main winding;
a primary-side switch (Q1) to interrupt a current that flows through the primary-side main winding;
at least one primary-side auxiliary winding (L4), in which, after the opening of the primary-side switch, an auxiliary voltage is induced to reproduce the output voltage;
and a control circuit (IC2) according to at least one of the preceding claims.

7. Switch mode power supply according to claim 6, wherein the voltage measurement input (U) is connected to a direct voltage potential or ground potential via a charging capacitor (C19).

8. Switch mode power supply according to claim 7, wherein the primary-side auxiliary winding (L4) is connected via a series connection consisting of a first and a second resistor (R101, R103) to a first terminal of the charging capacitor (C19), and the voltage measurement input (U) is connected to a common node between the first and the second resistor.

9. Switch mode power supply according to claim 6, wherein the transformer also has an additional winding (L5) which is connected to a terminal with the primary-side switch (Q1) and to another terminal with a ground potential.

10. Switch mode power supply according to claim 9, wherein the additional winding (L5) has a small number of windings, preferably a single winding.

11. Switch mode power supply according to claim 9 or 10, wherein between the additional winding (L5) and the primary-side switch (Q1) is a limitation resistor (R97) to limit the maximum current.

12. Switch mode power supply according to one of claims 8 to 11, wherein a third resistor (R102) for the adaptation of the regulating behavior is located parallel to the series connection consisting of the second resistor (R103) and the charging capacitor (C19).

13. Switch mode power supply according to one of claims 6 to 9, wherein a current measurement resistor (R93) is located between the switch (Q1) and a ground potential.

14. Method for controlling a primary-side switch by means of a control circuit (IC2) in a switch mode power supply with a transformer (200), which has a primary-side (L2) and a secondary-side (L3) main winding and at least one primary-side auxiliary winding (L4), in which after opening the primary-side switch, an auxiliary voltage is induced to reproduce the output voltage, wherein the method comprises the following steps:

control of the primary-side switch (Q1) to interrupt a current that flows through the primary-side main winding;
detection of the auxiliary voltage on a voltage measurement input (U) of the control circuit (IC2);
comparison of the detected auxiliary voltage with a reference value (Vref2) and amplification of the deviation between the detected auxiliary voltage and the reference value by means of an error amplifier (202);
feedback of the output signal of the error amplifier (202) to the voltage measurement input (U), wherein the output signal of the error amplifier (202) is fed back to the voltage measurement input (U) via a feedback switch (M1, M2) and at least one feedback resistor (R12, R14), connected in series with the feedback switch, **characterized in that**
said feedback switch is controlled to be conducting, when a demagnetization signal indicates that within the transformer no current is flowing, and wherein said feedback switch is controlled to be conducting, when the signal at said control output (B) indicates that the primary side switch (Q1) is switched on.

15. Method according to claim 16, wherein the detection of the auxiliary voltage on a voltage measurement input (U) of the control circuit (IC2) is carried out by means of a sample-and-hold element (SuH, SuH1).

16. Method according to at least one of claims 14 to 15, wherein the output signal of the error amplifier (202) also overlaps a voltage at a maximum current detection comparator (204).

17. Method according to claim 16, wherein the output of the error amplifier is connected to the input of the comparator (204) via a voltage divider (R15, R16).

18. Method according to at least one of claims 14 to 17, wherein the time point when the next switching-on of the primary switch will take place is determined by means of a voltage-time converter (TvonU) as a function of the output signal of the error amplifier.

## Revendications

1. Circuit de commande pour alimentation à découpage commandée côté primaire comprenant :

   une sortie de commande (B), qui peut être reliée à l'entrée de commande d'un commutateur (Q1) côté primaire de l'alimentation à découpage ;
   une entrée de mesure de tension (U) qui, pour déterminer une tension auxiliaire qui est induite en fonction de la tension de sortie côté secondaire, peut être reliée à un enroulement auxiliaire (L4) côté primaire d'un transformateur (200), un amplificateur d'erreur (202) servant à comparer la tension auxiliaire déterminée avec une valeur de référence (Vref2) et à amplifier l'écart entre la tension auxiliaire déterminée et la valeur de référence,
   où le circuit de commande (IC2) présente en outre une branche de retour servant à renvoyer le signal de sortie de l'amplificateur d'erreur (202) à l'entrée de mesure de tension (U), et où la branche de retour présente un commutateur de retour (M1, M2) et au moins une résistance de retour (R12, R14) connectée en série avec le commutateur de retour, **caractérisé en ce que**
   le commutateur de retour est commandé de telle sorte qu'il laisse passer le courant, lorsqu'un signal de démagnétisation indique que l'électricité ne passe pas par le transformateur, et en outre est commandé de telle sorte qu'il laisser passer le courant, lorsque le signal au niveau de la sortie de commande (B) indique que le commutateur (Q1) côté primaire est mis sous tension.

2. Circuit de commande selon la revendication 1, comprenant en outre un élément d'échantillonnage (SuH, SuH 1) pour déterminer la tension auxiliaire.

3. Circuit de commande selon au moins l'une des revendications précédentes, où le signal de sortie de l'amplificateur d'erreur (202) est en outre superposé à une tension au niveau d'un comparateur (204) pour déterminer la puissance maximale.

4. Circuit de commande selon la revendication 3, où la sortie de l'amplificateur d'erreur est reliée à l'entrée du comparateur via un diviseur de tension (R15, R16).

5. Circuit de commande selon au moins l'une des revendications précédentes, comprenant en outre un convertisseur tension-temps (TvonU) pour déterminer le moment auquel le prochain allumage du commutateur côté primaire a lieu, en fonction du signal de sortie de l'amplificateur d'erreur.

6. Alimentation à découpage commandée côté primaire avec
   un transformateur (200), qui comporte un enroulement principal côté primaire (L2) et côté secondaire (L3),
   un commutateur côté primaire (Q1) pour interrompre un courant qui circule à travers l'enroulement principal côté primaire,
   au moins un enroulement auxiliaire côté primaire (L4), dans lequel est induite une tension auxiliaire après l'ouverture du commutateur côté primaire pour représenter la tension de sortie,
   et un circuit de commande (IC2) selon au moins l'une des revendications précédentes.

7. Alimentation à découpage selon la revendication 6, où l'entrée de mesure de tension (U) est reliée avec un potentiel de tension continue ou un potentiel de masse par un condensateur de charge (C19).

8. Alimentation à découpage selon la revendication 7, où l'enroulement auxiliaire côté primaire (L4) est relié à une première borne du condensateur de charge (C19) par un circuit en série composé d'une première et d'une deuxième résistance (R101, R103), et l'entrée de mesure de tension (U) est reliée avec un noeud commun entre la première et la deuxième résistance.

9. Alimentation à découpage selon la revendication 6, où le transformateur comporte en outre un enroulement supplémentaire (L5) qui est relié par une première borne avec le commutateur côté primaire (Q1) et par une deuxième borne avec le potentiel de masse.

10. Alimentation à découpage selon la revendication 9, où l'enroulement supplémentaire (L5) comporte un petit nombre de spires, de préférence une spire unique.

11. Alimentation à découpage selon la revendication 9 ou 10, où une résistance de limitation (R97) est disposée entre l'enroulement supplémentaire (L5) et le commutateur côté primaire (Q1) pour limiter la puissance maximale.

12. Alimentation à découpage selon l'une quelconque des revendications 8 à 11, où une troisième résistance (R102) est disposée en parallèle du circuit en série composé de la deuxième résistance (R103) et du condensateur de charge (C19), pour ajuster le comportement de régulation.

13. Alimentation à découpage selon l'une quelconque des revendications 6 à 9, où une résistance de mesure d'intensité (R93) est disposée entre le commutateur (Q1) et un potentiel de masse.

14. Procédé de contrôle d'un commutateur côté primaire au moyen d'un circuit de commande (IC2) dans une alimentation à découpage avec un transformateur (200), qui comporte un enroulement principal côté primaire (L2) et côté secondaire (L3), ainsi qu'au moins un enroulement auxiliaire côté primaire (L4), dans lequel est induite une tension auxiliaire après l'ouverture du commutateur côté primaire pour représenter la tension de sortie, où le procédé comporte les étapes suivantes consistant à :

commander le commutateur côté primaire (Q1) pour interrompre un courant qui circule à travers l'enroulement principal côté primaire, déterminer la tension auxiliaire à une entrée de mesure de tension (U) du circuit de commande (IC2), comparer la tension auxiliaire déterminée avec une valeur de référence (Vref2) et à amplifier l'écart entre la tension auxiliaire déterminée et la valeur de référence à l'aide d'un amplificateur d'erreur (202), renvoyer le signal de sortie de l'amplificateur d'erreur (202) à l'entrée de mesure de tension (U), où le signal de sortie de l'amplificateur d'erreur (202) est renvoyé à l'entrée de mesure de tension (U) en passant à travers un commutateur de retour (M1, M2) et au moins une résistance de retour (R12, R14) couplée en série avec le commutateur de retour, **caractérisé en ce que** le commutateur de retour est commandé de telle sorte qu'il laisse passer le courant, lorsqu'un signal de démagnétisation indique que l'électricité ne passe pas par le transformateur, et où le commutateur de retour est commandé de telle sorte qu'il laisse passer le courant lorsque le signal au niveau de la sortie de commande (B) indique que le commutateur (Q1) côté primaire soit mis sous tension.

15. Procédé selon la revendication 16, où la détermination de la tension auxiliaire au niveau de l'entrée de mesure de tension (U) du circuit de commande (IC2) est réalisée au moyen d'un élément d'échantillonnage (SuH, SuH1).

16. Procédé selon au moins l'une des revendications 14 à 15, où le signal de sortie de l'amplificateur d'erreur (202) est en outre superposé à une tension au niveau d'un comparateur (204) pour déterminer la puissance maximale.

17. Procédé selon la revendication 16, où la sortie de l'amplificateur d'erreur est reliée à l'entrée du comparateur via un diviseur de tension (R15, R16).

18. Procédé selon au moins une des revendications 14 à 17, où le moment auquel le prochain allumage du commutateur côté primaire a lieu, est déterminé au moyen d'un convertisseur tension-temps (TvonU) en fonction du signal de sortie de l'amplificateur d'erreur.

FIG. 1 (Stand der Technik)

FIG. 2

FIG. 3

EP 2 051 360 B1

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1146630 B1
- DE 10310361 B4
- US 5438499 A